# EUROPÄISCHE PATENTSCHRIFT

(11) **EP 3 333 438 B1**
(45) Veröffentlichungstag und Bekanntmachung des Hinweises auf die Patenterteilung: **30.09.2020**
(21) Anmeldenummer: 17202958.9
(22) Anmeldetag: 22.11.2017
(51) Int. Cl.: F16C 33/38, F16C 29/06

(54) **LINEARKUGELLAGERKÄFIG, GEHÄUSE UND VERFAHREN**
LINEAR BALL BEARING CAGE, HOUSING AND METHOD
CAGE POUR ROULEMENT À BILLES LINÉAIRES, BOÎTIER ET PROCÉDÉ

(30) Priorität: 07.12.2016 DE 102016224336
(43) Veröffentlichungstag der Anmeldung: 13.06.2018
(73) Patentinhaber: Aktiebolaget SKF, 41 550 Göteborg (SE)
(72) Erfinder: Mayer, Uwe, 97702 Münnerstadtd (DE); Drügemöller, Andreas, 97456 Dittelbrunn (DE); Jeschka, Erwin, 97711 Maßbach (DE); Velde, Henryk, 97440 Werneck (DE)
(74) Vertreter: Heyerhoff Geiger & Partner Patentanwälte PartGmbB

(56) Entgegenhaltungen:
- EP-A1- 0 832 367
- EP-A2- 0 104 308
- WO-A1-2012/148058
- DE-A1- 1 575 608
- DE-A1- 19 937 278
- JP-A- 2005 214 315
- US-A- 4 128 278
- US-A1- 2016 032 966

## Beschreibung

Die Erfindung geht aus von einem Linearkugellagerkäfig nach dem Oberbegriff des Anspruchs 1 bzw. von einem Gehäuse nach dem Oberbegriff des Anspruchs 4 5 .

Es ist ein Gehäuse mit einem Aufnahmebereich bekannt, in den ein Linearkugellagerkäfig einbaubar ist. Ferner ist ein Linearkugellagerkäfig mit einer radialen Außenfläche aus z.B EP 0 832 367 und WO 2012/148058 bekannt.

In einem in ein Gehäuse eingebauten Zustand ist der Linearkugellagerkäfig relativ zu dem Gehäuse neigbar. Es ist ferner ein Linearkugellagerkäfig anderer Ausbildung bekannt, welcher eingebaut in dasselbe Gehäuse nicht relativ zu dem Gehäuse neigbar ist.

Die Aufgabe der Erfindung besteht insbesondere darin, eine hohe Effizienz zu erreichen. Die Aufgabe wird erfindungsgemäß durch die Merkmale des Patentanspruchs 1 und durch die Merkmale des Patentanspruchs 4 gelöst, während vorteilhafte Ausgestaltungen und Weiterbildungen der Erfindung den Unteransprüchen entnommen werden können.

Die Erfindung geht aus von einem Linearkugellagerkäfig mit wenigstens einer radialen Außenfläche.

Es wird vorgeschlagen, dass der Linearkugellagerkäfig wenigstens ein erstes Dichtungselement aufweist, welches zumindest teilweise an der Außenfläche angeordnet ist. Dadurch kann eine hohe Effizienz erreicht werden. Insbesondere kann eine einfache Befestigung des Linearkugellagerkäfigs in einem Aufnahmebereich eines Gehäuses gereicht werden. Außerdem kann insbesondere erreicht werden, dass eine Mittelachse des Linearkugellagerkäfigs relativ zu dem Gehäuse neigbar ist.

Ferner wird ein Gehäuse mit einem Aufnahmebereich, in den ein Linearkugellagerkäfig einbaubar ist, und mit wenigstens einem ersten Befestigungselement vorgeschlagen, mittels welchem der Linearkugellagerkäfig zumindest formschlüssig wenigstens in Bezug auf eine erste axiale Richtung an dem Gehäuse befestigbar ist. Hierdurch kann eine hohe Effizienz erreicht werden. Ferner kann insbesondere erreicht werden, dass der Linearkugellagerkäfig werkzeuglos und auf sehr einfache Weise in das Gehäuse einbaubar.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Teilschnitt durch eine Anordnung mit einem Gehäuse und einem Linearkugellagerkäfig, wobei ein Teil des Gehäuses nicht dargestellt ist, und
Fig. 2 zeigt eine Anordnung mit einem Teil eines erfindungsgemäßen Gehäuses und einem Linearkugellagerkäfig, wobei an einer Unterseite der Figur das Gehäuse nicht dargestellt ist.

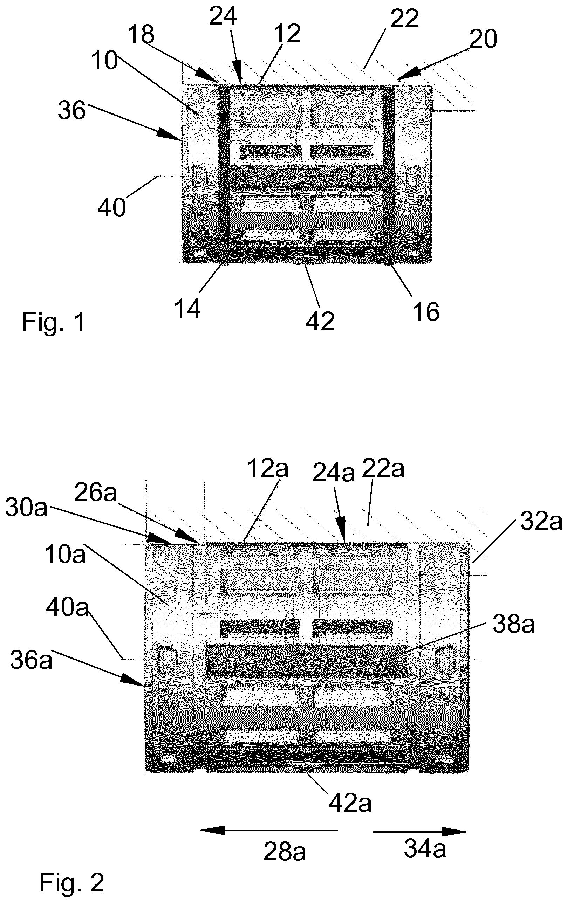

Figur 1 zeigt einen Teilschnitt durch eine Anordnung mit einem Gehäuse 22 und einem Linearkugellagerkäfig 10, wobei an der unteren Seite der Figur das Gehäuse nicht dargestellt ist. Der Linearkugellagerkäfig ist in einem Aufnahmebereich 24 des Gehäuses angeordnet. Außerdem weist der Linearkugellagerkäfig eine radiale Außenfläche 12 und ein erstes, als O-Ring ausgebildetes Dichtungselement 14 auf, das vollständig an der Außenfläche angeordnet ist. Ferner weist der Linearkugellagerkäfig ein zweites, als O-Ring ausgebildetes Dichtungselement 16 auf, das ebenfalls vollständig an der radialen Außenfläche angeordnet ist. Die beiden Dichtungselemente sind jeweils in einer sich in Umfangsrichtung des Linearkugellagerkäfigs erstreckenden Nut des Linearkugellagerkäfigs angeordnet. Außerdem sind die beiden Dichtungselemente an einander entgegengesetzten axialen Endbereichen 18, 20 des Linearkugellagerkäfigs angeordnet. An der Außenfläche weist der Linearkugellagerkäfig eine Erhebung 42 auf. Die Erhebung ist ringförmig ausgebildet. Außerdem liegt die Erhebung und die beiden Dichtungselemente an einer Innenfläche des Gehäuses an, wobei die Erhebung mit leichtem Presssitz anliegt. In den Linearkugellagerkäfig sind Laufbahnen 38 für die Kugeln des Linearlagers, dessen Teil der Linearkugellagerkäfig ist, eingesetzt.

Weisen die Laufbahnen eine relativ geringe radiale Dicke auf, so ist der Linearkugellagerkäfig derart relativ zu dem Gehäuse neigbar, das seine Mittelachse 40 um etwa ein halbes Grad verschwenkbar ist, wobei die ringförmige Erhebung 42 dann immer noch an der Innenfläche des Gehäuses anliegt.

Falls die Laufbahnen aber eine relativ große radiale Dicke aufweisen, so liegen diese an der Innenfläche des Gehäuses an und die Mittelachse des Linearkugellagerkäfigs ist relativ zu dem Gehäuse nicht verschwenkbar.

Insgesamt ist damit durch die radiale Dicke der Laufbahnen einstellbar, ob die Mittelachse 40 des Linearkugellagerkäfigs relativ zu dem Gehäuse neigbar ist oder nicht. Dies bedeutet, dass für diese beiden Fälle jeweils der gleiche Linearkugellagerkäfig verwendbar ist, wodurch für diesen eine hohe Stückzahl zur Produktion und damit geringe Produktionskosten erreicht werden. Ferner wird durch das Vorhandensein der beiden Dichtungselemente der Halt des Linearkugellagerkäfigs im Gehäuse erhöht. Die beiden Dichtungselemente sind außerdem ohne größeren Kraftaufwand an der Außenfläche montierbar. Des Weiteren bewirken die Dichtungselemente eine gute Abdichtung in dem Bereich, in dem sie an dem Gehäuse anliegen.

Vorteilhaftes ist weiter, dass bereits bestehende Formen für das Gehäuse verwendet werden können, sodass der beschriebene Linearkugellagerkäfig zusammen mit den erwähnten Laufbahnen auch in bereits bestehende Gehäuse nachgerüstet werden kann, falls beispielsweise in einem derartigen Gehäuse ein bereits längere Zeit benutztes Linearkugellager ausfällt.

Ferner ist vorteilhaft, dass bei vielen Anwendungen außer den erwähnten Dichtungselementen, die den Halt des Linearkugellagerkäfigs im Gehäuse verbessern, keine weiteren Sicherungen des Linearkugellagerkäfigs im Gehäuse notwendig sind (eine Sicherung mithilfe von Stiften oder Schmiernippeln entfällt somit). Außerdem dämpfen die Dichtungselemente in Betriebssituationen das Lagergeräusch, wodurch eine Geräuschreduzierung eintritt. Ein weiterer großer Vorteil ist, dass der Linearkugellagerkäfig mit den beiden Dichtungselementen weiterhin einfach und ohne größeren Kraftaufwand montiertbar ist.

In Figur 2 ist ein Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in Fig. 2 der Buchstabe "a" hinzugefügt. Die nachfolgende Beschreibung beschränkt sich im Wesentlichen auf die Unterschiede zu dem Ausführungsbeispiel in Fig. 1, wobei bezüglich gleich bleibender Bauteile, Merkmale und Funktionen auf die Beschreibung des Ausführungsbeispiels in Fig. 1 verwiesen werden kann.

Figur 2 zeigt eine Anordnung mit einem Teil eines erfindungsgemäßen Gehäuses 22a und einem Linearkugellagerkäfig 10a, wobei an einer Unterseite der Figur das Gehäuse nicht dargestellt ist. Der Linearkugellagerkäfig ist in das Gehäuse eingebaut. Das Gehäuse weist ein erstes Befestigungselement 26a auf mittels welchem der Linearkugellagerkäfig formschlüssig in Bezug auf eine erste axiale Richtung 28a an dem Gehäuse befestigt ist. Das erste Befestigungselement ist als Absatz ausgebildet, wobei der Absatz eine Kantenkürzung aufweist. Das erste Befestigungselement ist an einem axialen Endbereich 30a eines Aufnahmebereichs 24a des Gehäuses angeordnet.

Des Weiteren weist das Gehäuse ein zweites Befestigungselement 32a auf, welches ebenfalls als Absatz ausgebildet ist. Mittels des zweiten Befestigungselements ist der Linearkugellagerkäfig in Bezug auf eine zweite axiale Richtung 34a, welche der Richtung 28a entgegen gerichtet ist, an dem Gehäuse befestigt. Die beiden Befestigungselemente 26a, 32a sind jeweils ringförmig ausgebildet.

Bei einem Einbau des Linearkugellagers, das den Linearkugellagerkäfig aufweist, in das Gehäuse werden zunächst Kugeln und Laufbahnen 38a in den Linearkugellagerkäfig eingesetzt und nachfolgend der Linearkugellagerkäfig mit den Laufbahnen in den Aufnahmebereich eingedrückt, wobei der Linearkugellagerkäfig an den Befestigungselement 26 einschnappt. Danach wird eine Welle in den Linearkugellagerkäfig eingeschoben, wodurch die Laufbahnen nach radial außen gedrückt werden und an einer Innenfläche des Gehäuses anliegen, was bewirkt, dass der Linearkugellagerkäfig zusammen mit den Laufbahnen durch das Befestigungselement 26a auf sichere Weise formschlüssig in Bezug auf die Richtung 28a an dem Gehäuse befestigt ist. Durch ein Anliegen des Befestigungselements 26a an dem Gehäuse erfolgt außerdem eine gute Abdichtung zwischen dem Gehäuse und dem Linearkugellagerkäfig.

Falls der Linearkugellagerkäfig von dem Gehäuse demontiert werden soll, ist die Welle aus dem Linearkugellagerkäfig zu entfernen, sodass die Laufbahnen sich wieder nach radial innen bewegen, wodurch der Linearkugellagerkäfig zusammen mit den Laufbahnen zerstörungsfrei aus den Gehäuse herausziehbar ist.

**Bezugszeichenliste**

| | |
|---|---|
| 10 | Linearkugellagerkäfig |
| 12 | Außenfläche |
| 14 | Dichtungselement |
| 16 | Dichtungselement |
| 18 | Endbereich |
| 20 | Endbereich |
| 22 | Gehäuse |
| 24 | Aufnahmebereich |
| 26 | Befestigungselement |
| 28 | Richtung |
| 30 | Endbereich |
| 32 | Befestigungselement |
| 34 | Richtung |
| 36 | Teil |
| 38 | Laufbahn |
| 40 | Mittelachse |
| 42 | Erhebung |

## Patentansprüche

1. Linearkugellagerkäfig (10; 10a) mit wenigstens einer radialen Außenfläche (12), wobei der Linearkugellagerkäfig wenigstens ein erstes Dichtungselement (14) aufweist, welches zumindest teilweise an der Außenfläche angeordnet ist, wobei das erste Dichtungselement eine Schrumpffolie ist.

2. Linearkugellagerkäfig nach Anspruch 1, wobei der Linearkugellagerkäfig wenigstens ein zweites Dichtungselement (16) aufweist, welches wenigstens teilweise an der radialen Außenfläche angeordnet ist.

3. Linearkugellagerkäfig nach Anspruch 2, wobei die beiden Dichtungselemente an einander entgegengesetzten axialen Endbereichen (18, 20) des Linearkugellagerkäfigs angeordnet sind.

4. Gehäuse (22a) für eine Linearkugellageranordnung mit einem Aufnahmebereich (24a) für einen Linearkugellagerkäfig (10a), aufweisend wenigstens ein erstes Befestigungselement (26a), mittels welchem der Linearkugellagerkäfig zumindest formschlüssig wenigstens in Bezug auf eine erste axiale Richtung (28a) an dem Gehäuse (22a) befestigbar ist,
**dadurch gekennzeichnet,**
**dass** das Gehäuse ein zweites Befestigungselement (32a) aufweist, mittels welchem der Linearkugellagerkäfig wenigstens in Bezug auf eine zweite axiale Richtung (34a), die der ersten axialen Richtung (28a) entgegengerichtet ist, an dem Gehäuse befestigbar ist.

5. Gehäuse nach Anspruch 4, wobei das erste Befestigungselement als Absatz ausgebildet ist.

6. Gehäuse nach Anspruch 4 oder Anspruch 5, wobei das erste Befestigungselement eine zerstörungsfrei trennbare Befestigung des Linearkugellagerkäfigs an dem Gehäuse in Bezug auf die erste axiale Richtung ermöglicht.

7. Gehäuse nach einem der Ansprüche 4 bis 6, wobei das erste Befestigungselement an einem axialen Endbereich (30) des Aufnahmebereichs angeordnet ist.

8. Linearkugellageranordnung mit einem Gehäuse (22a) gemäß einem der Ansprüche 4 bis 7 und einem Linearkugellagerkäfig (10a).

9. Verfahren zum Befestigen eines Linearkugellagerkäfigs (10a) eines Linearkugellagers in einem Gehäuse (22a) gemäß einem der Ansprüche 4 bis 7, bei welchem der Linearkugellagerkäfig durch ein Eindrücken des Linearkugellagerkäfigs in einen Aufnahmebereich (24a) des Gehäuses an dem Gehäuse befestigt wird.

## Claims

1. Linear ball bearing cage (10; 10a) with at least one radial outer surface (12), wherein the linear ball bearing cage comprises at least a first seal element (14) which is arranged at least partially on the outer surface, wherein the first seal element is a shrink film.

2. Linear ball bearing cage according to Claim 1, wherein the linear ball bearing cage comprises at least a second seal element (16) which is arranged at least partially on the radial outer surface.

3. Linear ball bearing cage according to Claim 2, wherein the two seal elements are arranged on mutually opposed axial end regions (18, 20) of the linear ball bearing cage.

4. Housing (22a) for a linear ball bearing arrangement with a receiving region (24a) for a linear ball bearing cage (10a), comprising at least a first fastening element (26a), by means of which the linear ball bearing cage can be fastened at least in a form-fitting manner, at least in relation to a first axial direction (28a), to the housing (22a),
**characterized in that**
the housing comprises a second fastening element (32a), by means of which the linear ball bearing cage can be fastened, at least in relation to a second axial direction (34a) which is opposed to the first axial direction (28a), to the housing.

5. Housing according to Claim 4, wherein the first fastening element is configured in the form of a shoulder.

6. Housing according to Claim 4 or Claim 5, wherein the first fastening element makes it possible to fasten the linear ball bearing cage, in relation to the first axial direction, to the housing in a non-destructively separable manner.

7. Housing according to one of Claims 4 to 6, wherein the first fastening element is arranged on an axial end region (30) of the receiving region.

8. Linear ball bearing arrangement with a housing (22a) according to one of Claims 4 to 7 and a linear ball bearing cage (10a).

9. Method for fastening a linear ball bearing cage (10a) of a linear ball bearing in a housing (22a) according to one of Claims 4 to 7, in which the linear ball bearing cage is fastened to the housing by pushing the linear ball bearing cage into a receiving region (24a) of the housing.

## Revendications

1. Cage pour roulement à billes linéaire (10 ; 10a) comprenant au moins une surface extérieure radiale (12), la cage pour roulement à billes linéaire présentant au moins un premier élément d'étanchéité (14) qui est disposé au moins en partie au niveau de la surface extérieure, le premier élément d'étanchéité étant une feuille thermorétractable.

2. Cage pour roulement à billes linéaire selon la revendication 1, la cage pour roulement à billes linéaire présentant au moins un deuxième élément d'étanchéité (16) qui est disposé au moins en partie au niveau de la surface extérieure radiale.

3. Cage pour roulement à billes linéaire selon la revendication 2, dans laquelle les deux éléments d'étanchéité sont disposés au niveau de régions d'extrémité axiales opposées (18, 20) de la cage pour roulement à billes linéaire.

4. Boîtier (22a) pour un agencement de roulement à billes linéaire comprenant une région de réception (24a) pour une cage pour roulement à billes linéaire (10a), présentant au moins un premier élément de fixation (26a) au moyen duquel la cage pour roulement à billes linéaire peut être fixée au boîtier (22a) au moins par engagement par correspondance de formes au moins par rapport à une première direction axiale (28a),
**caractérisé en ce que**
le boîtier présente un deuxième élément de fixation (32a) au moyen duquel la cage pour roulement à billes linéaire peut être fixée au boîtier au moins par rapport à une deuxième direction axiale (34a) qui est opposée à la première direction axiale (28a).

5. Boîtier selon la revendication 4, dans lequel le premier élément de fixation est réalisé sous forme d'épaulement.

6. Boîtier selon la revendication 4 ou la revendication 5, dans lequel le premier élément de fixation permet une fixation séparable sans destruction de la cage pour roulement à billes linéaire au boîtier par rapport à la première direction axiale.

7. Boîtier selon l'une quelconque des revendications 4 à 6, dans lequel le premier élément de fixation est disposé au niveau d'une région d'extrémité axiale (30) de la région de réception.

8. Agencement de roulement à billes linéaire comprenant un boîtier (22a) selon l'une quelconque des revendications 4 à 7 et une cage pour roulement à billes linéaire (10a).

9. Procédé de fixation d'une cage pour roulement à billes linéaire (10a) d'un roulement à billes linéaire dans un boîtier (22a) selon l'une quelconque des revendications 4 à 7, dans lequel la cage pour roulement à billes linéaire est fixée au boîtier par pression de la cage pour roulement à billes linéaire dans une région de réception (24a) du boîtier.
